# EUROPÄISCHE PATENTSCHRIFT

(11) **EP 1 056 987 B1**
(45) Veröffentlichungstag und Bekanntmachung des Hinweises auf die Patenterteilung: **27.04.2005**
(21) Anmeldenummer: 99908879.2
(22) Anmeldetag: 11.02.1999
(51) Int. Cl.: G01B 11/10, G01B 11/02, G01S 7/481

(54) **LASERSCANNER-MESSSYSTEM**
LASER SCANNER MEASUREMENT SYSTEM
SYSTEME DE MESURE A SCANNER LASER

(30) Priorität: 16.02.1998 DE 19806288
(43) Veröffentlichungstag der Anmeldung: 06.12.2000
(73) Patentinhaber: Fraunhofer-Gesellschaft zur Förderung der angewandten Forschung e.V., 80686 München (DE)
(72) Erfinder: HARTRUMPF, Matthias, D-76187 Karlsruhe (DE)
(74) Vertreter: Gagel, Roland, Dr.
(86) Internationale Anmeldenummer: PCT/EP1999/000903
(87) Internationale Veröffentlichungsnummer: WO 1999/041568

(56) Entgegenhaltungen:
- EP-A- 0 416 362
- EP-A- 0 439 802
- EP-A- 0 439 803
- EP-A- 0 532 291
- DE-A- 3 526 656
- DE-A- 4 114 786
- US-A- 4 201 476
- US-A- 4 432 648
- US-A- 4 748 332
- CHANG K S: "CORRECTION ALGORITHMS IN A LASER SCANNING DIMENSION MEASUREMENT SYSTEM" IEE PROCEEDINGS A. PHYSICAL SCIENCE, MEASUREMENT & INSTRUMENTATION, MANAGEMENT & EDUCATION, Bd. 139, Nr. 2 PART A, 1. März 1992, Seiten 57-60, XP000296856

## Beschreibung

Die Erfindung betrifft ein konfigurierbares Laserscanner-Meßsystem zur Vermessung einseitig zugänglicher und/oder komplex geformter oder strukturierter Objekte gemäß dem Oberbegriff des Anspruch 1.

### Stand der Technik

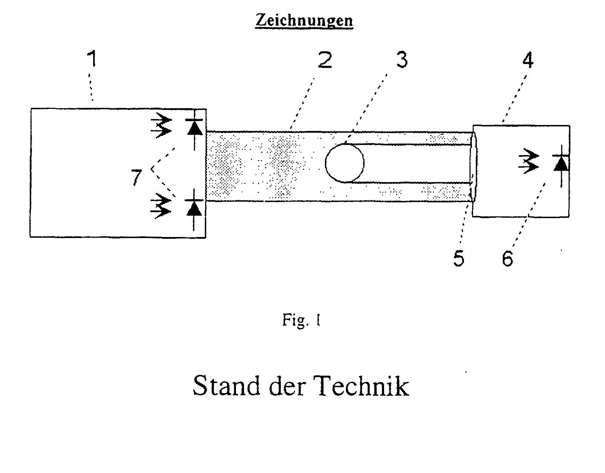

Zur Vermessung beidseitig zugänglicher Körper werden vielfach telezentrische Laserscanner eingesetzt. Das Prinzip dieser Scanner zeigt Fig. 1. Die Scannereinheit (1) sendet einen Laserstrahl (2) aus, der auf die gegenüberliegende Empfängereinheit (4) ausgerichtet ist. Befindet sich kein Meßobjekt (3) im Strahlengang, so gelangt der Strahl unbeeinflußt in den Empfänger und wird dort mit einer, im Brennpunkt der Empfängeroptik (5) angeordneten, Fotodiode (6) detektiert. Trifft der Strahl auf ein Meßobjekt, so wird er abgeschattet. Zur Vermessung wird der Laserstrahl mit konstanter Geschwindigkeit (Scangeschwindigkeit vₛ) parallel zur Verbindungslinie Scanner-Empfänger verschoben. Ist die Scangeschwindigkeit bekannt, kann die Größe des Meßobjekts senkrecht zur Verschieberichtung aus der Zeitdauer der Abschattung des Strahls berechnet werden.

Die Berücksichtigung der Scangeschwindigkeit kann mit folgenden Verfahren erfolgen:
1. sie wird z. B. mit Hilfe einer Regelung konstant gehalten und dieser konstante Wert wird als Parameter in der Auswertung berücksichtigt,
2. sie wird gemessen. Die Messung erfolgt z.B. indirekt über eine Messung der Winkelgeschwindigkeit der Umlenkeinheit im Scanner oder direkt mittels zweier, im Scanner fest angeordneter, Fotodioden (7). Letztere detektieren den Zeitpunkt des Scanstarts (tₛₜₐᵣₜ) bzw. des Scanstops (tₛₜₒₚ). Die Scangeschwindigkeit ist der Quotient aus dem Abstand der Fotodioden und der Zeitdifferenz zwischen Scanstop und Scanstart. Der Abstand der Fotodioden wird durch Kalibrierung ermittelt.

Bei anderen Scannerkonzepten wird anstelle einer Fotodiode in der Brennebene der Empfängeroptik eine spezielle Blende und zwei Fotodioden eingesetzt (EP 0 439 803). Dieses Konzept gestattet die Vermessung des Schattenwurfs von Objekten, die eine Ausdehnung kleiner als der Strahldurchmesser des Laserstrahls aufweisen. Dazu wird das Fraunhofer-Beugungsmuster ausgewertet, wenn der Laserstrahl genau auf das Meßobjekt ausgerichtet ist. Dieser Zeitpunkt ist dadurch gekennzeichnet, daß dann die Summe beider Intensitäten maximal ist. Aus dem Verhältnis der zu diesem Zeitpunkt mit den einzelnen Fotodioden gemessenen Intensitäten wird die Größe des Meßobjekts ermittelt.

Aus Chang K. S.: "Correction Algorithms in a Laser Scanning Dimension Measurement System", in: IEEE Proceedings A, Physical Science, Measurement and Instrumentation, Management & Education, Bd. 139, Nr. 2 Part A, 1. März 1992, Seiten 57 - 60, ist ein Laserscanner-Messsystem gemäß dem Oberbegriff des Patentanspruchs 1 bekannt. Die Veröffentlichung befasst sich mit einem Korrekturatgorithmus zur Korrektur der Nichtlinearität der Scan-Geschwindigkeit in einem Laser-Scanner, die in erster Linie durch das fokussierende Linsensystem verursacht wird. Mit einem Photodetektor wird hierbei der zeitliche Beginn und das zeitliche Ende einer Abschattung durch ein in den Strahlengang eingebrachtes Objekt erfasst.

Die EP 0439802 A2 beschreibt kein Laserscanner-Messsystem, sondern eine Vorrichtung zum Messen der Position eines Filamentbündels. Die Vorrichtung weist in einer Ebene senkrecht zur Fortbewegungsrichtung des Filamentbündels eine Lichtquelle sowie in Strahlrichtung hinter dem Filamentbündel eine Detektoreinrichtung auf. Die Detektoreinrichtung wird mit einem Winkel von 10 bis 45° gegen die Beleuchtungsrichtung geneigt, so dass kein direktes Licht der Lichtquelle auf die Detektoreinrichtung trifft. Diese Maßnahme ist notwendig, da das Signal der einzelnen Faser weniger als 1 µW beträgt, wohingegen die Lichtquelle eine Leistung von bis zu 150 W hat. Als Detektoreinrichtung wird bei dem in dieser Druckschrift beschriebenen Verfahren eine Fernsehkamera, eine Matrix von Fotodioden oder eine positionsempfindliche Fotodiode eingesetzt.

### Probleme

Letztlich können mit den beschriebenen Laserscannern lediglich beidseitig zugängliche Objekte vermessen werden. Prinzipiell meßbar sind alle Eigenschaften, die zu einer kompletten Abschattung des Laserstrahls durch das Meßobjekt führen. Dies sind zum Beispiel:
- bei massiven Stäben der Durchmesser,
- bei Profilkörpern die maximale Ausdehnung in Scanrichtung (die Richtung in der sich der Laserstrahl mit der Zeit durch das Meßfeld bewegt),
- bei kammförmigen Strukturen die Breite der Zinken bzw. Zwischenräume dazwischen.

Objekteigenschaften, die nicht zu einer kompletten Abschattung bzw. zu Fraunhofer-Beugung führen bzw. nur einseitig zugängliche Meßobjekte sind nach dem Stand der Technik mit telezentrischen Laserscannern nicht vermessbar.

Aufgabe der Erfindung ist es das Laserscanner-Meßsystem so zu verbessern, daß es zur Vermessung einseitig zugänglicher und/oder komplex geformter oder strukturierter Objekte geeignet ist. Erfindungsgemäß wird dies erreicht durch das Laserscanner-Meßsystem gemäß den Patent ansprüchen 1 bis 12.

### Erfindung

Gegenstand der Erfindung ist ein konfigurierbares Laserscanner-Meßsystem zur Vermessung einseitig zugänglicher und / oder komplex geformter oder strukturierter Objekte.

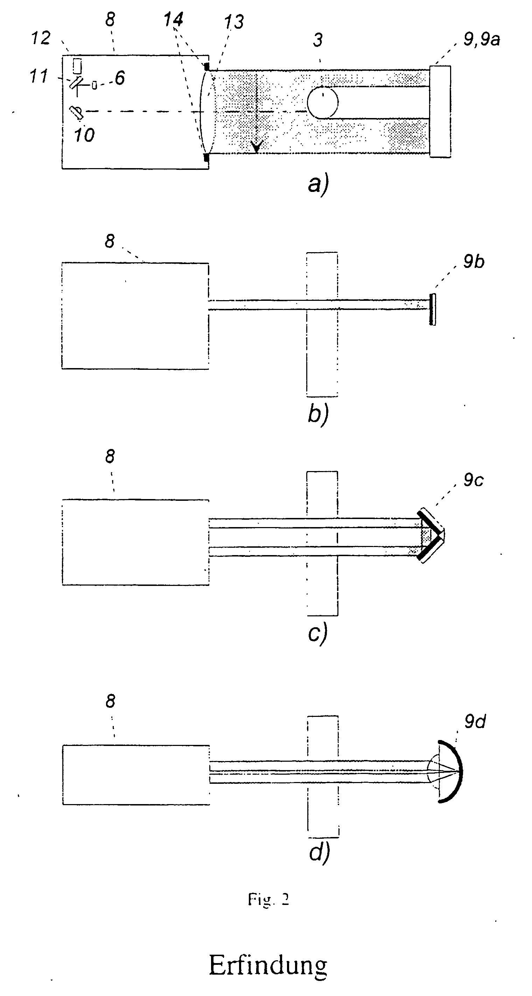

Nach Anspruch 1 wird die Vermessung von einer Seite aus mittels eines Laserscanner-Meßsystems erreicht, das beispielsweise aus einer kombinierten Beleuchtungs-Empfängereinheit (s. Fig. 2, Nr. 8) besteht. Vom Laser 12 ausgehend durchquert der Laserstrahl den Strahlteiler 11 und gelangt über die Ablenkeinheit 10 und die kombinierte Sender-Empfängeroptik 13 in den Außenraum. Trifft der Laserstrahl auf ein spiegelndes Oberflächenelement des Meßobjekts, dessen Flächennormale mit der Richtung des Laserstrahls zusammenfällt, so wird der Laserstrahl in die Empfängereinheit zurückgespiegelt. Er gelangt über die Optik, die Umlenkeinheit und den Strahlteiler auf den Detektor 6. Aus der Messung des Zeitpunkts, zu dem der Laserstrahl zurückgespiegelt wird, kann die Position dieses senkrecht zum Laserstrahl orientierten Flächenelements bestimmt werden. Beipielsweise kann derart eine Bestimmung des Mittelpunkts eines blanken Stabes mit kreisförmigem Querschnitt erfolgen.

Die Ausdehnung von Objekten mit matter Oberfläche kann vermessen werden, sofern sich die Streueigenschaften der Objektoberfläche deutlich von den Streueigenschaften des Hintergrundes 9 unterscheiden lassen.

Überstreicht der Laserstrahl eine Objektoberfläche, deren Streueigenschaften sich im Meßfeld ändert, so kann die Ausdehnung von Zonen mit deutlich unterschiedlicher Streucharakteristik vermessen werden. Weist das Objekt beispielsweise im festen Zustand eine matte und im flüssigen Zustand eine blanke Oberfläche auf, so kann die Größe des flüssigen Bereichs aus dem Intensitätsverlauf ermittelt werden.

Die Messung des Beginns bzw. Endes eines Scans kann erreicht werden, indem zwei retroreflektierende Marken (Folienpunkte) in der Scanner-Empfängereinheit angeordnet werden. Die Detektion der Zeitpunkte kann mittels der Empfängerdiode erfolgen.

### Kurze Beschreibung der Zeichnungen

Das vorliegende Laserscanner-Messsystem ist in den Figuren nochmals beispielhaft dargestellt, von denen zeigen:
- Fig. 1: ein Beispiel für das bekannte Prinzip eines telezentrischen Laserscanners;
- Fig. 2: Beispiele für das vorliegende Laserscanner-Messsystem mit unterschiedlichen Retroreflektoren;
- Fig. 3: ein Beispiel für das vorliegende Laserscanner-Messsystem mit einer Dunkelfeldblende;
- Fig. 4: ein weiteres Beispiel für das vorliegende Laserscanner-Messsystem mit einer Dunkelfeldblende;
- Fig. 5: ein weiteres Beispiel für das vorliegende Laserscanner-Messsystem mit einer Dunkelfeldblende;
- Fig. 6: ein weiteres Beispiel für das vorliegende Laserscanner-Messsystem mit einer Dunkelfeldblende;
- Fig. 7: ein Beispiel für das vorliegende Laserscanner-Messsystem mit mehreren zusätzlichen Retroreflektor-Einheiten an unterschiedlichen Positionen relativ zu einem Objekt;
- Fig. 8: ein Beispiel für das vorliegende Laserscanner-Messsystem, bei dem der Laserstrahl in eine Richtung senkrecht zur Scanebene aufgespalten und für jede Scanlinie ein separater Emprfänger eingesetzt wird;

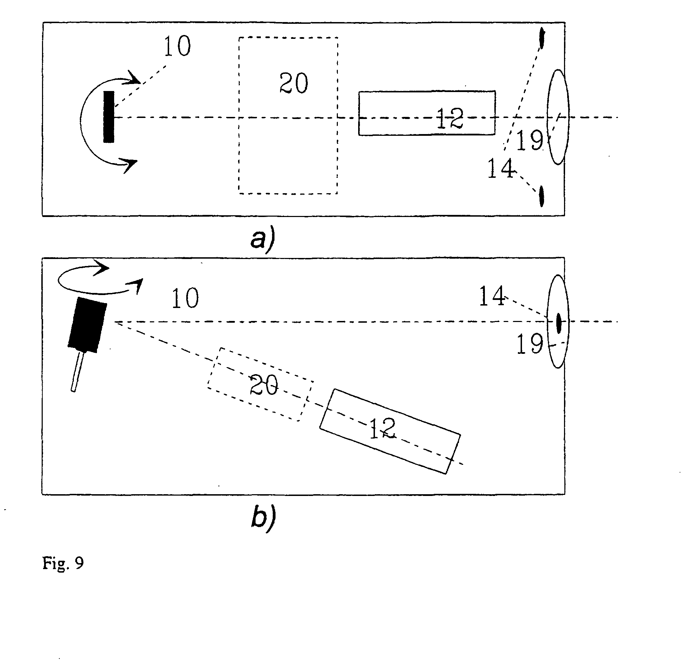

- Fig. 9: zwei Beispiele, bei denen das vorliegende Laserscanner-Messsystem als modulares System aufgebaut ist; und

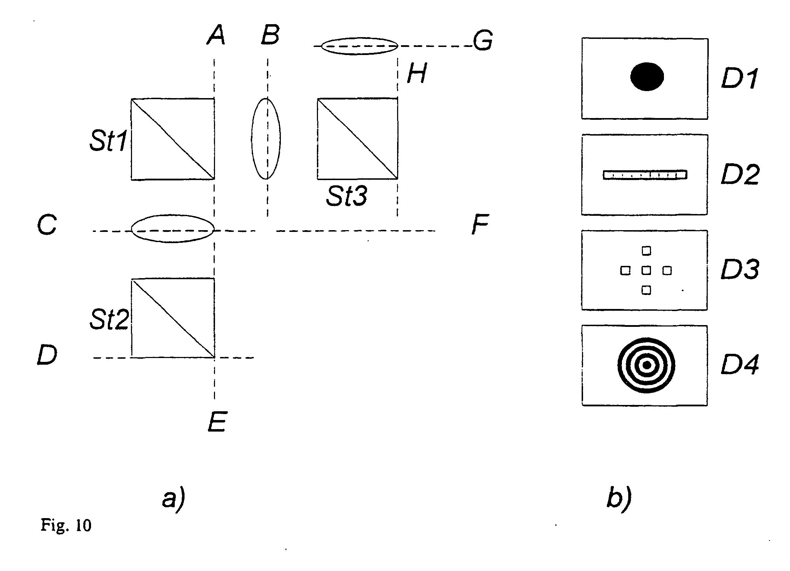

- Fig. 10: verschiedene Elemente eines modularen Systems gemäß Fig. 9.

Kann in Abstrahlrichtung hinter dem Meßobjekt eine retroreflektierende Einheit angeordnet werden (z. B. retroreflektierende Folie 9a, verspiegelte Quaderecke 9b oder "lens-type" Retroreflektor), so sind weitere Objekteigenschaften vermeßbar. Die Retroreflektoreinheit reflektiert die auftreffenden Strahlen in sich bzw. in der Richtung senkrecht zur Scanebene (definiert durch die optische Achse des Laserscanners und die Bewegungsrichtung des Laserstrahls) versetzt in die Scanner-Empfängereinheit zurück. Durch besondere Ausbildungen oder Anordnungen des Retroreflektors lassen sich spezielle Arten der Vermessung realisieren. Als Beispiele seien folgende besonders ausgezeichnete Ausführungen genannt:
- wird ein Folienreflektor (9b in Fig. 2b) verwendet, so kann der Schattenwurf und aus dem Schatten die Außenkontur eines praktisch nur einseitig zugänglichen Meßobjekts bestimmt werden,
- andere Retroreflektoren (in Form zweier zueinander senkrechter Spiegel (s. 9c in Fig. 2c), Prismas oder Retroreflektoren bestehend aus einer rückseitig verspiegelten Kombination zweier sphärischer Linsen bzw. Zylinderlinsen (9d in Fig. 2d)) ermöglichen - je nach Dimensionierung der Optik und Elektronik des Scannersystems die Vermessung der maximalen bzw. mittleren Ausdehnung des Meßobjekts über die Richtung senkrecht zur Symmetrieachse des Retroreflektors.

Neben der Möglichkeit zur Ermittlung weiterer geometrischer Größen des Meßobjekts bzw. der Möglichkeit zur Vermessung schwer zugänglicher Objekte, bietet eine erfindungsgemäße Anordnung mit Retroreflektoren den Vorteil, daß nur ein Gerät verkabelt werden muß. Bei Verwendung eines Folienreflektors muß zudem keine Justage der Reflektoreinheit erfolgen.

Eine sehr genaue Bestimmung des Zeitpunkts, an dem der Laserstrahl auf das Meßobjekt trifft, kann erfolgen, indem
- vor dem Fotodetektor eine Dunkelblende angeordnet wird und die
- Auswerteelektronik die Zeitpunkte bestimmt, an denen die auf den Detektor auftreffende Strahlung einen Maximalwert erreicht.

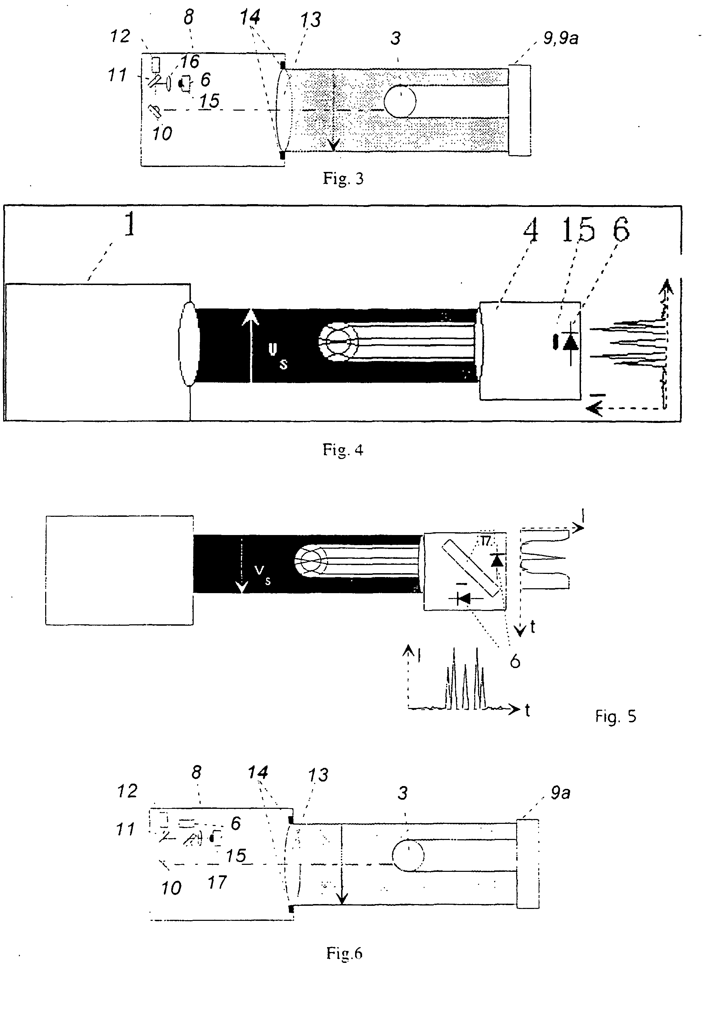

Diese Auswertung nutzt die Beugung der Grenzstrahlen an den Objektkanten. Sie wird durch Änderungen der Leistung des Lasers und Änderung der Intensität der Laserstrahlung im Verlauf eines Scans wenig beeinflußt. Sie ist sowohl mit einem Laserscanner mit getrennten Sender- und Empfängereinheiten (s. Fig. 3), als auch mit Laserscannern mit einer gemeinsamen Sende- Empfangseinheit realisierbar (s. Fig. 4). In letzterer ist es gegebenenfalls vorteilhaft vor der Dunkelfeldblende eine zusätzliche Linse 16 anzuordnen.

Werden telezentrische Laserscanner nach dem Stand der Technik zur Vermessung von Glasrohren benutzt, können Fehlfunktionen auftreten, da es neben den Schattenkanten am Außendurchmesser drei zusätzliche ausgezeichnete Strahlengänge gibt, bei denen Licht von der Scannereinheit in den Empfänger gelangt:
1. Rohrmitte: das Rohr wirkt dort wie eine Linse, der Mittenstrahl gelangt praktisch ungeschwächt auf den Detektor.
2. zwei Reflexionen an der Innenwand: die auf das Rohr fallende Strahlung wird beim Eintritt in das Rohr zur Rohrmitte gebrochen, an der Innenwand reflektiert und beim Austritt erneut gebrochen. An genau 2 Stellen auf dem Rohr sind die einfallenden und die austretenden Strahlen parallel zueinander, so daß die Strahlen im Empfänger detektiert werden können. Die Position dieser Stellen auf dem Rohr hängt vom Durchmesser, von der Wanddicke und vom Brechungsindex des Rohres ab.

Die Amplitude dieser Signale ist bei Anordnungen nach dem Stand der Technik gering, kann jedoch die Vermessung stören. Eine der erfindungsgemäßen Anordnungen führt dazu, daß die Reflexionen an der Innenwand sehr gut detektierbare Signale mit großem Störabstand liefern, aus denen die Wanddicke der Rohre berechnet werden kann. Diese Signale können sehr gut ausgewertet werden indem mit der Auswerteelektronik die Zeitpunkte bestimmt werden, an denen das Signal lokale Maxima erreicht. Eine Methode dazu ist mit der Auswerteelektronik folgende Bedingungen zu überprüfen:
1. Die Ableitung des Signals hat einen Nulldurchgang.
2. Das Signal ist größer als das Rauschen.

Werden die Zeiten, zu denen beide Bedingungen erfüllt sind gemessen, kann für Glasrohre eine relativ störunempfindliche Erfassung des Durchmessers und zweier Wanddickewerte erfolgen.

Störungen kann es bei dieser Art der Kanten- und Reflexauswertung geben, wenn die Vermessung in einer staubigen Umgebung oder in einer Umgebung mit starken Luftbewegungen oder Luftturbulenzen durchgeführt werden muß. In diesen Fällen kann mit einer Anordnung nach Anspruch 5 eine erhebliche Steigerung der Robustheit der Vermessung erreicht werden. Dazu wird der Empfängerstrahlengang mit einem Strahlteiler 17 (s. Fig. 5 und Fig. 6) derart aufgespalten, daß ein Teil der Strahlung auf eine Fotodiode mit davor angeordneter Dunkelfeldblende gelangt, ein anderer Teil der Strahlung gelangt direkt auf eine zweite Fotodiode. Die Bestimmung der Kanten kann auf die oben beschriebene Art erfolgen. Die zusätzlich vorhandene Intensitätsmessung wird genutzt, um sicherzustellen, daß nur Signalmaxima im Bereich zwischen den Schattenkanten zur Auswertung herangezogen werden. Störungen durch Luftschlieren oder Staub im Bereich außerhalb der Schattenkanten werden eliminiert, indem die Auswertung gesperrt wird, solange oder sobald das Signal auf der zweiten Fotodiode größer als ein (gegebenenfalls einstellbarer) Schwellwert ist.

Eine äquivalente Bestimmung der Kanten- und Reflexpositionen kann durchgeführt werden, wenn anstelle einer Fotodiode ein Fotodiodenarray oder eine Fotodiodenmatrix in der Brennebene der Empfängeroptik bzw. hinter der Strahlablenkeinheit angeordnet wird. Sie ist derart anzuordnen, daß ein Element des Arrays den Anteil der Strahlung detektiert, welcher den Außenraum ohne Wechselwirkung mit dem Meßobjekt durchquert. Das Signal dieses Elements hat einen Verlauf, wie er auch mit der zweiten Fotodiode in einer Anordnung nach Anspruch 2 detektiert wird, jedoch doppelte Amplitude (da keine Verluste an dem Strahlteiler entstehen).

Mit einer positionsempfindlichen Fotodiode kann die Lage der Schattenkanten bzw. der Innenreflexe und zusätzlich der mittlere Differenzwinkel der Oberflächen eines teiltransparenten Meßobjekts gegen die Scanrichtung und die Scanebene vermessen werden. Die zusätzliche Vermessung nutzt den Effekt, daß der Winkel der Oberflächenelemente zu einer Ablenkung des transmittierten Strahls führt, der als Höhenversatz in der Brennebene detektiert werden kann.

Eine positionsempfindliche Fotodiode erlaubt ferner die gleichzeitige Bestimmung des Reflexes an der Objektoberfläche und des Kippwinkels des Objekts gegen die Scanebene. Dazu wird sie als Sensor in einem Empfänger eingesetzt, der unter einem Winkel ungleich 0° oder 180° zur optischen Achse des Scanners angeordnet ist.

Werden zwei Empfänger auf gegenüberliegenden Seiten des Meßobjekts unter einem Winkel gegen die Scanrichtung angeordnet, so können Meßobjekte vermessen werden, deren Ausdehnung größer als die Breite des abgescannten Bereiches ist. Werden die Empfänger beispielsweise unter ± 90° zur Strahlrichtung angeordnet, erhält man bei Objekten mit kreisförmigem Querschnitt eine Verkleinerung um den Faktor 2^{0.5}. Das bedeutet Objekte mit einer Ausdehnung bis zum 1,4-fachen des abgescannten Bereichs können noch vermessen werden.

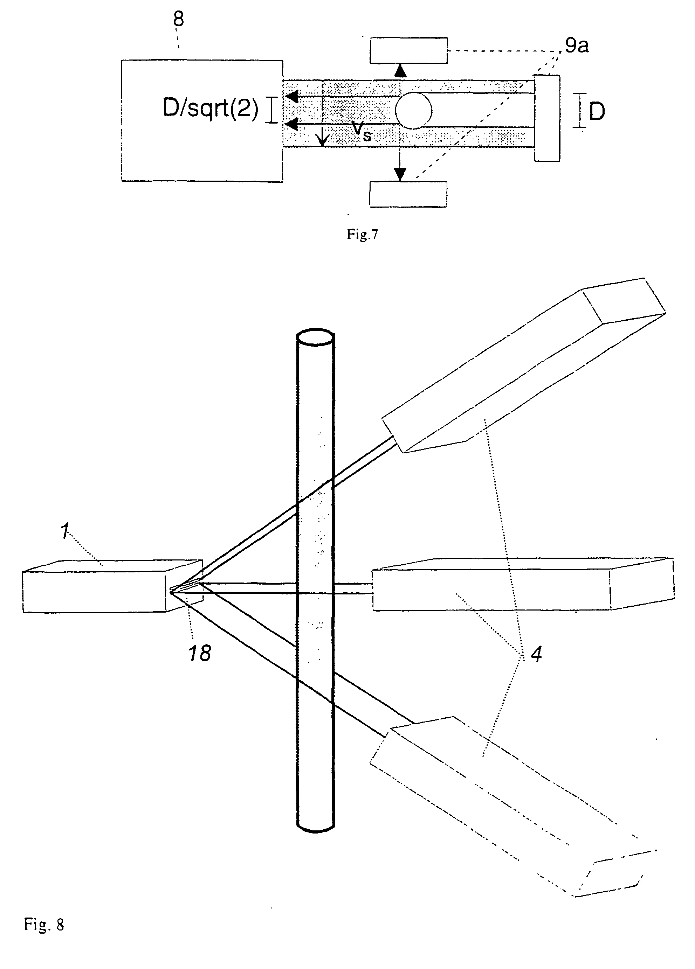

Äquivalent dazu ist die Anordnung mehrerer (zusätzlicher) Retroreflektoreinheiten an entsprechenden Stellen, sofern eine kombinierte Sende-Empfangseinheit verwendet wird (s. Fig. 7).

Durch Wahl des Winkels der Empfänger bzw. Retroreflektoreinheit(en) gegen die Scanrichtung kann der Maßstab der Verkleinerung in weiten Grenzen variiert werden.

Werden zur Vermessung mehrere Retroreflektoren eingesetzt und beispielsweise unter 180°, unter + 90° und -90° zur Scannereinheit angeordnet, erhält man den Mittelpunkt und mehrere Punkte auf dem Umfang des Meßobjekts (s. Fig. 7). Daraus kann beispielsweise die Abweichung der Form des Meßobjekts von der Idealform vermessen werden. Beispielsweise kann der vermessene Objektquerschnitt durch eine Ellipse beschrieben werden. Aus den Parametern der Ellipse kann die Abweichung des Querschnitts von einer idealen Kreisform ermittelt werden.

Wird eine derartige Anordnung mit einem Scanner aufgebaut, der eine konvergente oder divergente Abstrahlrichtung aufweist, können aus den Grenzstrahlen (Schattenkanten) 2 Tangenten an das Meßobjekt bestimmt werden. Zusätzliche Punkte auf der Objektoberfläche erhält man durch Auswertung der retroreffektierten Strahlen. Aus diesen Meßgrößen kann der Durchmesser und die Lage des Meßobjekts in der Scanebene bestimmt werden.

Weitere Vorteile bietet diese Anordnung bei der Vermessung transparenter Rohre. Der Abstand zwischen den an der Außenwand und an der Innenwand reflektierten Strahlen ist bei dieser Anordnung erheblich größer ist als bei der 180° Anordnung. Sie ermöglicht daher eine Verbesserung der Meßgenauigkeit bzw. die Vermessung dünnwandiger Rohre.

Weitere geometrische Kenngrößen des Meßobjekts werden der Messung zugänglich, sofern der Laserstrahl mit optischen Mitteln (wie z.B. einem parallel zur Scanrichtung angeordneten Gitter) senkrecht zur Scanebene aufgespalten wird. Im Falle der Verwendung separater Empfänger wird für jede Scanlinie ein eigener Empfänger vorgesehen. Wird eine kombinierte Scanner/ Empfängereinheit eingesetzt, wird vorzugsweise vor dem Strahlteiler für die Aufteilung zwischen Sende- und Empfangsstrahlengang ein Gitter angeordnet und mittels des Gitters aufgespalten. Im Empfängerstrahlengang befinden sich dann im Brennpunkt der Optik pro auszuwertendem Strahlengang je eine Fotodiode bzw. ein Element eines Fotodiodenarrays. Durch die Aufspaltung des Scanstrahlengangs in mehrere Partialstrahlengänge kann der Verlauf der Objektgeometrie über die Ebene senkrecht zur Scanebene ermittelt werden. Damit kann beispielsweise ein konischer Verlauf der Objektkontur oder eine Krümmung des Meßobjekts sicher erfaßt werden.

Ein größerer Winkel zwischen den Partialstrahlengängen kann gegebenenfalls durch Verwendung einer Zylinderoptik im Sendestrahlengang erreicht werden.

Eine Erweiterung des Meßverfahrens wird durch ein optisches Bauelement zur Aufspaltung eines Laserstrahls in mehrere, in der Scanebene liegende, Teilstrahlengänge beispielsweise ein Gitter, dessen Linien senkrecht zur Scaneben verlaufen) ermöglicht.

Wird das Element im Bereich zwischen dem Laser und dem Brennpunkt der Scanneroptik angeordnet, treffen mehrere Strahlen auf die Ablenkeinheit in der Brennebene der Senderoptik. Dadurch emittiert die Scannereinheit mehrere Strahlenbündel. Sie liegen in der Scanebene (der Ebene, welche durch die Scanrichtung und die optische Achse definiert ist), weisen aber einen (ggf. mit dem Ort variierenden) Winkel zur Scanrichtung auf. Diese Strahlen werden am Meßobjekt abgeschattet, gebeugt oder reflektiert und können in der Empfängeroptik in der Brennebene in einem definierten Abstand zum Brennpunkt detektiert werden. Dazu muß dort pro Teilstrahlengang ein Fotodetektor oder ein Element eines Detektorarrays vorgesehen werden. Über eine Auswertung der Schattenkanten bzw. der Reflexions- oder Beugungspeaks des entsprechenden zeitlichen Intensitätsverlaufs kann die Lage des Objekts in der ausgeleuchteten Ebene vermessen werden.

Die Anordnung polarisierender Strahlteiler im Strahlengang ermöglicht die Erfassung des Polarisationszustands der detektierten Strahlung. Damit können Objekteigenschaften vermessen werden, welche die Polarisationszustände der transmittierten Strahlen unterschiedlich beeinflussen. Neben dem Strahlteiler ist zusätzlich jeweils ein Detektorelement pro zu erfassender Meßgröße im Empfängerstrahlengang anzuordnen. Aus den Unterschieden der Intensitäten kann die zu erfassende Objektkenngröße bestimmt werden.

Für doppelbrechende oder optisch aktive Folien kann beispielsweise die optische Weglänge und damit die Schichtdicke oder das Drehvermögen in Richtung der optischen Achse ermittelt werden. Dazu wird ein Scanner mit einem zirkular polarisierten Laserstrahl verwendet und ein polarisierender Strahlteiler im Sender- oder Empfängerstrahlengang, sowie für jeden Teilstrahlengang ein Fotodetektor(element) im Empfänger angeordnet.

Weitere zusätzliche, die Polarisation der transmittierten Strahlung beeinflussende Kenngrößen des Objekts sind meßbar, sofern sowohl im Sende- als auch im Empfängerstrahlengang eine Aufspaltung der unterschiedlich polarisierten Strahlungskomponenten erfolgt.

Werden zusätzlich zu dieser Aufspaltung ein oder mehrere wellenlängenselektive Filter in den Empfängerstrahlengang eingebracht, so kann für Substanzen (z.B. PET), die intrinsische polarisierte Fluoreszenz aufweisen, eine gleichzeitige Vermessung folgender Kenngrößen erfolgen:
1. Objektposition und Ausdehnung in Scanrichtung,
2. Verlauf des 1. Moments der Orientierungsverteilungsfunktion,
3. Verlauf des 2. Moments der Orientierungsverteilungsfunktion.

Bei PET tritt die intrinsische polarisierte Fluoreszenz selektiv in den nichtkristallinen Bereichen auf. Diese sind für die mechanischen Eigenschaften und die Anfärbbarkeit des Objekts entscheidend. Mit der beschriebenen Anordnung kann - über eine Vermessung der Momente der Orientierungsverteilungsfunktion - selektiv der Verlauf dieser Größen im Material erfaßt werden.

Weitere Kenngrößen des Meßobjekts lassen sich ermitteln, sofern in der Empfängereinheit zwei Strahlengänge (der vom Objekt kommende Strahlengang und ein Referenzstrahlengang oder ein den Objektraum durchquerender bzw. vom Objekt kommender, gegebenenfalls modulierter, zweiter Strahlengang) so überlagert werden, daß die Strahlen interferieren. Je nach Ausbildung dieses Strahlengangs und Signalauswertung kann dann, zusätzlich zur Ermittlung der oben beschriebenen Kenngrößen, der Abstand oder die Kontur eines Meßobjekts in Richtung der optischen Achse bzw. die Geschwindigkeit der Bewegung des Meßobjekts durch die Scanebene erfaßt werden. Bei Nutzung des Retroreflektorprinzips kann der Referenzstrahlengang beispielsweise in Form eines Michelson-Interferometers im Inneren der kombinierten Sende-Empfangseinheit aufgebaut werden. Im Falle der Verwendung einer separaten Empfängereinheit kann der Referenzstrahlengang (am Meßobjekt vorbei) durch den Objektraum oder mittels Lichtleiter vom Scanner zum Empfänger geführt werden.

Die aufgeführten Meßarten sind untereinander nahezu beliebig kombinierbar. Besonders vorteilhaft kann dies mit einem modularen System realisiert werden, das aus einem Scannerkopf, einem Meßmodul und gegebenenfalls einem Empfängergehäuse mit Optik besteht. Die Scannereinheit 1 besteht aus
- einem Laser (12),
- einer Ablenkeinheit (10) und
- einer Optik 19,
sowie gegebenenfalls (bei Vermessung der Reflexion bzw. Rückstreuung oder Nutzung einer Retroreflektoreinheit) den zusätzlichen Komponenten:
- Empfängermodul (20)
- Scanstart- und Scanstopreflektor (14).

Das Empfängermodul weist Montagemöglichkeiten für Detektormodule (s. schematische Darstellung in Fig. 11b), Linsen oder Spiegel (Positionen A bis H in Fig. 11 a) und Strahlteiler auf (s. Positionen St1 bis St3 in Fig. 11 a). Je nach Bestückung des Empfängermoduls und der gewählten Anordnung lassen sich unterschiedliche Kombinationen verschiedener Meßgrößen ableiten. Einige Beispiele dafür sind in Tabelle 1 angegeben:

**Tabelle 1:**

| Beispiele für unterschiedliche Konfigurationen eines erfindungsgemäßen Laserscanner-Meßsystems | | | | | |
|---|---|---|---|---|---|
| Modus | Empfänger | Objekt | Meßgrößen | Bauelement | Position |
| 1 | separat 180° | Glasrohr | Durchmesser, Wanddicke, Mittenposition | Fotodiodenarray D2 | A |
| 2 | kombiniert | Glasrohr | Durchmesser, Wanddicke, Mittenposition | Strahlteiler 50% Fotodiodenarray D2 | St1 C |
| 3 | separat 180° | transparente Fasern | Position Durchmesser, Polarisationsgrad | Strahlteiler polarisierend Ringfotodiode D4 Fotodiode D1 | St1 B C |
| 4 | kombiniert | transparente Fasern | Position Durchmesser, Polarisationsgrad | Strahlteiler 50% Strahlteiler polarisierend Ringfotodiode D4 Fotodiode D1 | St1 St2 B C |
| 5 | kombiniert | optisch aktive Schichten | Ausdehnung, Schichtdicke | Strahlteiler 50% Strahlteiler polarisierend Fotodiodenarray D2 Fotodiode 1 | St1 St2 B C |
| 6 | kombiniert | Stäbe, Rohre | Durchmesser, Konizität, Durchbiegung | Gitter parallel Scan-richtung Linse Strahlteiler 50% Linse Strahlteiler 50% Fotodiodenarray D2 Fotodiodenarray D3 | H B St1 C St2 D E |
| 7 | kombiniert | Stäbe, Rohre | Durchmesser, Lage in der Scanebene Konizität, Durchbiegung, Geschwindigkeit | Kreuzgitter Strahlteiler Linse Strahlteiler 50% Linse Strahlteiler 50% Fotodiodenarray D2 Fotodiodenarray D3 Fotodiode D1 (aktiver) Spiegel | H St3 B St1 C St2 D E F G |

Erfindungsgemäße Laserscanner lassen sich besonders vorteilhaft zur Regelung von Produktionsprozessen nutzen, indem sie relevante Prozeßgrößen erfassen, die einer Prozeßsteuerung oder Regelung als Eingangssignale zugeführt werden.

## Patentansprüche

1. Laserscanner-Messsystem, bestehend aus einer Sendereinheit (8) mit einem Laser (12), einer Strahlablenkeinheit (10) und einer Senderoptik (13), die einen Abtaststrahlengang sowie eine Abtastebene festlegen, sowie einem Empfängerteil (4, 8) mit einem Fotodetektor (6), der in der Brennebene einer Empfängeroptik (13) für einen Empfängerstrahlengang angeordnet ist, wobei die Flächennormale der Empfängeroptik parallel zum Abtaststrahlengang ist,
**dadurch gekennzeichnet,**
**dass** der Fotodetektor (6) ein Fotodiodenarray oder eine positionsauflösende Fotodiode ist und dass Sendereinheit (8) und Empfängerteil (8) auf der gleichen Seite relativ zu einem zu vermessenden Objekt (3) angeordnet sind.

2. Laserscanner-Messsystem nach dem Oberbegriff des Anspruchs 1,
**dadurch gekennzeichnet,**
**dass** im Empfängerstrahlengang im Brennpunkt der Empfängeroptik (13) eine Dunkelfeldblende (15) vor dem Fotodetektor (6) angeordnet ist, vor der Dunkelfeldblende aus dem Empfängerstrahlengang durch einen Strahlteiler (17) ein Teilstrahl abgespalten wird und im Teilstrahl eine Fototdiode (6) annähernd im Brennpunkt der Empfängeroptik angeordnet ist.

3. Laserscanner-Messsystem nach Anspruch 2,
**dadurch gekennzeichnet, dass** Sendereinheit (8) und Empfängerteil (8) auf der gleichen Seite relativ zu einem zu vermessenden Objekt (3) angeordnet sind.

4. Laserscanner-Messsystem nach dem Oberbegriff des Anspruchs 1,
**dadurch gekennzeichnet,**
**dass** der Fotodetektor (6) ein Fotodiodenarray ist, mit dem durch ein im Abtaststrahlengang angeordnetes Glasrohr hindurchtretende Lichtstrahlen ortsaufgelöst detektierbar sind und dass eine Auswerteelektronik vorgesehen ist, mit der unter Berücksichtigung von auf Grund der durch das Glasrohr hindurchtretenden Lichtstrahlen erhaltenen Signale Durchmesser, Wanddicke und/oder Mittenposition des Glasrohres ermittelbar sind.

5. Laserscanner-Messsystem nach einem der Ansprüche 1 bis 4,
**dadurch gekennzeichnet,**
**dass** sich von der Sendereinheit (8) aus gesehen hinter dem zu vermessenden Objekt (3) eine Retroreflektoreinheit (9, 9a - 9d) befindet, welche auftreffende Strahlung in sich oder mit einem Parallelversatz zurückspiegelt, so dass der Empfängerstrahlengang in einer Ebene liegt, die parallel zu der Abtastebene versetzt ist.

6. Laserscanner-Messsystem nach einem der Ansprüche 1 bis 5,
**dadurch gekennzeichnet,**
**dass** im Inneren der Sendereinheit (8), in einem Bereich zwischen der Strahlablenkeinheit (10) und einem Strahlaustritt mindestens ein Retroreflektor (14) oder eine retroreflektierende Marke angeordnet ist.

7. Laserscanner-Messsystem nach einem der Ansprüche 1 bis 6,
**dadurch gekennzeichnet,**
**dass** ein oder mehrere Empfängereinheiten oder Retroreflektoren unter einem Winkel ungleich 0° oder 180° zur optischen Achse der Scannereinheit in der Scanebene angeordnet sind.

8. Laserscanner-Messssystem nach einem der Anprüche 1 bis 7,
**dadurch gekennzeichnet,**
**dass** im Scannerstrahlengang eine Optik zur Aufspaltung des Scanstrahles in der Richtung senkrecht zur Scanrichtung (z.B. ein Gitter dessen Linien senkrecht zur Scanrichtung ausgerichtet sind) angeordnet ist.

9. Laserscanner-Messsystem nach einem der Anprüche 1 bis 8,
**dadurch gekennzeichnet,**
**dass** im Scannerstrahlengang eine Optik zur Aufspaltung des Scanstrahles in der Richtung parallel zur Scanrichtung (z.B. ein Gitter dessen Linien parallel zur Scanrichtung ausgerichtet sind) angeordnet ist.

10. Laserscanner-Messsystem nach den Anprüchen 1 bis 9,
**dadurch gekennzeichnet,**
**dass** im Beleuchtungsstrahlengang und / oder im Empfängerstrahlengang optische Elemente zur Aufspaltung des Strahlengangs für unterschiedlich polarisierte Strahlung (zum Beispiel polarisierender Strahlteiler, Wollastonprisma, Verzögerungsplatte und Glan-Thomson-Prisma) angeordnet sind.

11. Laserscanner-Messsystem nach den Anprüchen 1 bis 10,
**dadurch gekennzeichnet,**
**dass** im Empfängerstrahlengang wellenlängensensitive Filter (Interferenzfilter, Farbfilter oder Kantenfilter) angeordnet sind.

12. Laserscanner-Meßsystem nach den Anprüchen 1 bis 11,
**dadurch gekennzeichnet,**
**dass** in der kombinierten Scanner-Empfängereinheit, im Außenraum oder mittels eines Lichtwellenleiters ein Referenzstrahlengang realisiert ist, der dem vom Meßobjekt kommenden Strahlengang derart überlagert wird, dass das resultierende, sich örtlich und zeitlich, ändernde Interferenzmuster mit mindestens einem Detektorelement detektiert wird.

13. Laserscanner-Messsystem nach den Ansprüchen 1 bis 12 zur Verwendung zur Regelung eines Produktionsprozesses.

## Claims

1. Laser scanner measuring system consisting of an emitter unit (8) with a laser (12), a beam deflector unit (10) and an optical emitter system (13), which define a scanning beam path as well as a scanning plane, and a receiver unit (4, 8) including a photo detector (6) disposed in the focal plane of an optical receiver system (13) for a receiver beam path, wherein the surface normal of said optical receiver system is parallel with the scanning beam path,
**characterised in**
**that** said photo detector (6) is a photo diode array or a position-resolving photo diode, and that said emitter unit (8) and said receiver unit (8) are arranged on the same side relative to an object (3) to be measured.

2. Laser scanner measuring system according to the introductory clause of Claim 1,
**characterised in**
**that** a dark-field stop (15) is disposed in the receiver beam path ahead of said photo detector (6) in the focal point of said optical receiver system (13), that ahead of said dark-field stop a partial beam is split by a beam splitter (17) from said receiver beam path, and that a photo diode (6) is disposed in said partial beam approximately in the focal point of said optical receiver system.

3. Laser scanner measuring system according to Claim 2,
**characterised in that** said emitter unit (8) and said receiver unit (8) are arranged on the same side relative to an object (3) to be measured.

4. Laser scanner measuring system according to the introductory clause of Claim 1,
**characterised in**
**that** said photo detector (6) is a photo diode array by means of which light beams passing through a glass tube disposed in said scanning beam path can be detected in a form resolved by location, and that an electronic analyser system is provided by means of which the diameter, the wall thickness and/or the position of the centre of said glass tube can be determined in consideration of signals obtained on the basis of the light beams passing through said glass tube.

5. Laser scanner measuring system according to any of the Claims 1 to 4,
**characterised in**
**that**, when seen from said emitter unit (8), a retro reflector unit (9, 9a - 9d) is located behind the object (3) to be measured, which retro reflector unit reflects any incident radiation back either in itself or with a parallel offset such that the receiver beam path is located in a plane offset in parallel relative to said scanning plane.

6. Laser scanner measuring system according to any of the Claims 1 to 5,
**characterised in**
**that** at least one retro reflector (14) or a retro-reflecting marker is disposed inside said emitter unit (8) in a zone between said beam deflector unit (10) and a beam-emerging site.

7. Laser scanner measuring system according to any of the Claims 1 to 6,
**characterised in**
**that** one or several receiver units or retro reflectors are disposed at an angle different from 0° or 180° relative to the optical axis of the scanner unit in the scanning plane.

8. Laser scanner measuring system according to any of the Claims 1 to 7,
**characterised in**
**that** an optical system is arranged in said scanning beam path for splitting the scanning beam in the direction orthogonal on the scanning direction (e.g. a grid having lines oriented orthogonally on the scanning direction).

9. Laser scanner measuring system according to any of the Claims 1 to 8,
**characterised in**
**that** an optical system is arranged in said scanning beam path for splitting the scanning beam in the direction parallel with the scanning direction (e.g. a grid having lines oriented in parallel with the scanning direction).

10. Laser scanner measuring system according to any of the Claims 1 to 9,
**characterised in**
**that** optical elements are arranged in the illuminating beam path and/or in the receiver beam path for splitting said beam path for radiation of different polarisation (e.g. polarising beam splitter, Wollaston prism, retarding plate and Glan-Thomson Prism).

11. Laser scanner measuring system according to any of the Claims 1 to 10,
**characterised in**
**that** filters sensitive in terms of wavelength (interference filters, colour filters or cut-off filters) are disposed in the receiver beam path.

12. Laser scanner measuring system according to the Claims 1 to 11,
**characterised in**
**that** a reference beam path is realised in the combined scanner receiver unit, in the outside space or by means of a light guide, which is superimposed on the beam path coming from the object to be measured, in such a way that the resulting interference pattern, which varies locally and in the course of time, is detected by means of at least one detector element.

13. Laser scanner measuring system according to the Claims 1 to 12 for application for control of a production process.

## Revendications

1. Système mesureur à balayage par laser composé d'une unité émettrice (8) à un laser (12), une unité déviatrice des faisceaux (10) et un système optique émetteur (13), qui définissent une trajectoire des faisceaux de balayage ainsi qu'un plan de balayage, et d'une unité réceptrice (4, 8) renfermant un photodétecteur (6) disposé dans le plan focal d'un système optique récepteur (13) pour une trajectoire des faisceaux du récepteur, dans lequel la normale de surface dudit système optique de récepteur est parallèle à la trajectoire des faisceaux de balayage,
**caractérisé en ce**
**que** ledit photodétecteur (6) est une matrice à photodiodes ou une photodiode à résolution de position, et en ce que ladite unité émettrice (8) et ladite unité réceptrice (8) sont disposées du même côté relatif à un objet (3) à mesurer.

2. Système mesureur à balayage par laser selon le préambule de la revendication 1,
**caractérisé en ce**
**qu'**un diaphragme sur fond obscur (15) est disposé dans la trajectoire des faisceaux du récepteur devant ledit photodétecteur (6) dans le foyer dudit système optique de récepteur (13), en ce qu'un rayon partiel est divisé, devant ledit diaphragme sur fond obscur, moyennant un séparateur des faisceaux (17) à partir de ladite trajectoire des faisceaux du récepteur, et en ce qu'une photodiode (6) est disposée dans ledit rayon partiel environ dans le foyer dudit système optique de récepteur.

3. Système mesureur à balayage par laser selon la revendication 2,
**caractérisé en ce que** ladite unité émettrice (8) et ladite unité réceptrice (8) sont disposées du même côté relatif à un objet (3) à mesurer.

4. Système mesureur à balayage par laser selon le préambule de la revendication 1,
**caractérisé en ce**
**que** ledit photodétecteur (6) est une matrice à photodiodes, moyennant laquelle des rayons de lumière traversant un tube en verre disposé dans ladite trajectoire des faisceaux de balayage sont détectables sous forme résolue par site, et en ce qu'un système analyseur électronique est disposé, moyennant lequel on peut établir le diamètre, l'épaisseur de paroi et/ou la position du centre dudit, en considération des signaux obtenus sur la base des rayons de lumière traversant ledit tube en verre.

5. Système mesureur à balayage par laser selon une quelconque des revendications 1 à 4,
**caractérisé en ce**
**que**, vue à partir de ladite unité émettrice (8), une unité rétroréflectrice (9, 9a - 9d) se trouve en arrière de l'objet (3) à mesurer, ladite unité rétroréflectrice réfléchissant tout rayonnement incident en retour, soit en soi, soit à un tel déport parallèle, que la trajectoire des faisceaux du récepteur se trouve dans un plan déporté en parallèle relativement audit plan de balayage.

6. Système mesureur à balayage par laser selon une quelconque des revendications 1 à 5,
**caractérisé en ce**
**qu'**au moins un rétroréflecteur (14) ou un repère rétroréflecteur est disposé à l'intérieur de ladite unité émettrice (8) dans une zone entre ladite unité déviatrice des rayons (10) et un site de sortie du rayon.

7. Système mesureur à balayage par laser selon une quelconque des revendications 1 à 6,
**caractérisé en ce**
**qu'**un ou plusieurs unité(s) réceptrice(s) ou rétroréflecteurs sont disposés à un angle différent de 0° ou 180° relatif à l'axe optique de l'unité à balayage dans le plan de balayage.

8. Système mesureur à balayage par laser selon une quelconque des revendications 1 à 7,
**caractérisé en ce**
**qu'**un système optique est disposé dans ladite trajectoire des faisceaux de balayage à diviser le rayon de balayage en sens orthogonal sur le sens de balayage (p. ex. un réseau aux lignes orientées en sens orthogonal sur la direction de balayage).

9. Système mesureur à balayage par laser selon une quelconque des revendications 1 à 8,
**caractérisé en ce**
**qu'**un système optique est disposé dans ladite trajectoire des faisceaux de balayage à diviser le rayon de balayage en une direction parallèle au sens de balayage (p. ex. un réseau aux lignes orientées en parallèle à la direction de balayage).

10. Système mesureur à balayage par laser selon une quelconque des revendications 1 à 9,
**caractérisé en ce**
**que** des éléments optiques sont disposés dans la trajectoire du faisceau d'éclairage et/ou dans la trajectoire des faisceaux du récepteur afin de diviser ladite trajectoire de faisceaux pour le rayonnement à polarisation différente (p. ex. un séparateur polarisant des faisceaux, un prisme de Wollaston, une plaque de retard et un prisme de Glan-Thomson).

11. Système mesureur à balayage par laser selon une quelconque des revendications 1 à 10,
**caractérisé en ce**
**que** des filtres sensibles pour des longueurs d'onde (filtres d'interférence, filtres de couleurs ou filtres d'arrêt) sont disposés dans la trajectoire des faisceaux du récepteur.

12. Système mesureur à balayage par laser selon les revendications 1 à 11,
**caractérisé en ce**
**qu'**une trajectoire de faisceau de référence est réalisée dans l'unité combinée à scanneur et réceptrice dans l'espace extérieur ou moyennant un guide d'ondes optiques, qui est superposé sur la trajectoire de faisceau provenant de l'objet à mesurer, d'une telle manière, que la figure d'interférence, qui en résulte et qui varie localement et au cours du temps, soit détectée moyennant d'au moins un élément détecteur.

13. Système mesureur à balayage par laser selon les revendications 1 à 12 pour l'application à commander un processus de fabrication.
